# EUROPEAN PATENT SPECIFICATION

(11) **EP 3 190 650 B1**
(45) Date of publication and mention of the grant of the patent: **05.09.2018**
(21) Application number: 16207420.7
(22) Date of filing: 29.12.2016
(51) Int. Cl.: H01M 8/04089, H01M 8/04223, H01M 8/04228

(54) **METHOD OF SUPPLYING AND PURGING A FUEL CELL**
VERFAHREN ZUR VERSORGUNG UND SPÜLUNG EINER BRENNSTOFFZELLE
PROCÉDÉ D'ALIMENTATION ET DE PURGE D'UNE PILE À COMBUSTIBLE

(30) Priority: 08.01.2016 IT UB20169883
(43) Date of publication of application: 12.07.2017
(73) Proprietor: Electro Power Systems Manufacturing S.r.L., 20129 Milano (IT)
(72) Inventor: MICUCCI, Stefano, I - 10040 Villar Dora (Torino) (IT); CANTONE, Lorenzo, I - 10139 Torino (IT); NOVO, Emiliano, I - 14017 Valferena (Asti) (IT)
(74) Representative: Lunati & Mazzoni S.r.L.

(56) References cited:
- EP-A1- 2 221 907
- DE-A1-102007 026 004
- US-A1- 2007 031 710
- US-A1- 2010 015 482

## Description

The object of the present invention is a device and a method of purging a fuel cell of the type specified in the preamble of the independent claims.

Fuel cells are currently known. They are used for the manufacture of electricity from chemical reactions of hydrogen, arranged in suitable tanks and in the gaseous state, binding with oxygen, which is also arranged in suitable tanks in the gaseous state or present in the environment, to provide water molecules and obtain electricity from the reaction.

Briefly, the fuel cells comprise two portions, an anode and a cathode separated by an electrolyte. Each portion comprises an element for the channelling of the oxygen from the cathode side, and of the hydrogen from the anode side, an electrode and a separation membrane, adapted to separate the two gases and to maintain the ion exchange between the two portions.

The fuel cells are then usually provided stacked in so-called stacks, each mutually connected so as to allow for the supply of gas to all the cells and the extraction of energy from all the cells.

In particular, hydrogen is supplied to the cells through a pressurised container from which, during operation of the cell, it is continuously conveyed to the anode side of the cells of the stack. The anode side also includes outlet and recirculating ducts, which continuously recirculate the hydrogen, for example, by means of recirculation pumps, again during operation of the cell.

The same thing can take place at the cathode side, except that the connection occurs with oxygen.

Thus, in the fuel cells, only hydrogen and oxygen in the gaseous state react.

However, usually inert substances, such as nitrogen, water and others, enter or form as condensation in the fuel cells and damage the same, decreasing the efficiency and creating various problems and reducing the service life of the component.

Similar fuel cells are described in patent applications US-A-2010/015482, DE-A-102007026004, US-A-2007/031710 and EP-A-2221907.

In order to discharge the said substances, the recirculation ducts comprise purge valves, which, when open, achieve the discharge thereof.

The described prior art has a few major drawbacks.

In particular, during said purging operations, part of the hydrogen or oxygen in the gaseous state, required for the reaction, is expelled together with the inert matter and thus wasted.

Moreover, said purging is often not able to eliminate all or at least a desired part of the inert matter.

In this context, the technical task underlying the present invention is to devise a device and a method of purging a fuel cell, which is capable of substantially obviating the above-mentioned drawbacks.

Within the scope of said technical task, a major object of the invention is to obtain a device and a method of purging a fuel cell, which allows for not wasting hydrogen and optionally also oxygen, which are required for the conversion reaction of the same into water and electricity.

Another important object of the invention is to provide a device and a method of purging a fuel cell, which allows a large amount of external elements not required for the reaction of the fuel cell itself to be eliminated.

The technical task and the objects specified are achieved by means of a device and a method of purging a fuel cell as claimed in the appended independent claims.

Preferred embodiments are set forth in the dependent claims.

The features and advantages of the invention will be apparent from the detailed description of preferred embodiments of the invention, with reference to the accompanying drawings, in which:

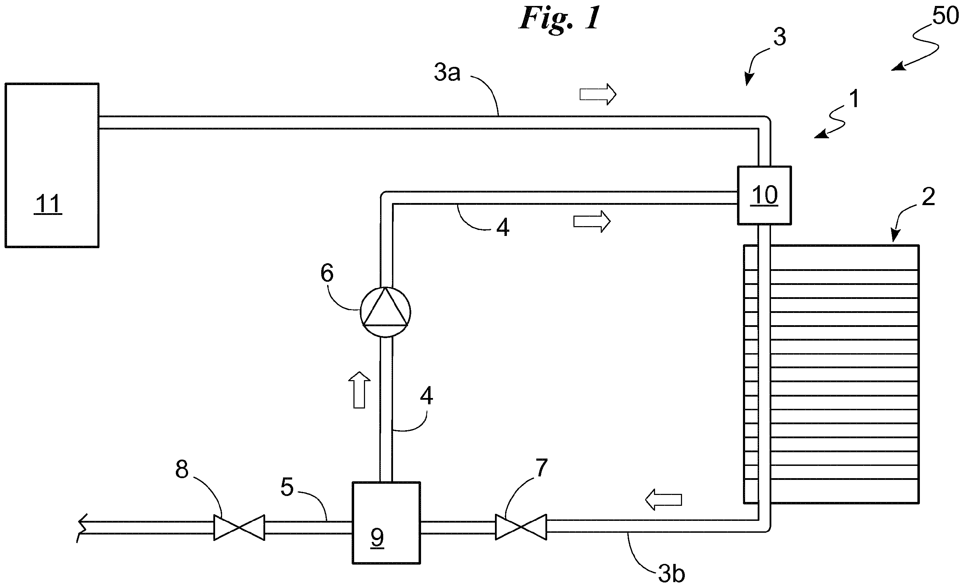

**Fig. 1** schematically shows a first example of the device according to the invention; and
**Fig. 2** schematically shows a second example of the device according to the invention.

In the present document, the measures, values, shapes and geometric references (such as perpendicularity and parallelism), when associated with terms such as "about" or with other similar terms such as "almost" or "substantially", are to be understood as contemplating the possibility of measurement errors or inaccuracies due to production and/or manufacturing defects and, especially, contemplating the possibility of a slight difference in the value, measure, shape or geometric reference with which it is associated. For example, these terms, if associated with a value, preferably indicate a difference of not more than 10% of the value itself. Furthermore, when used, terms such as "first", "second", "higher", "lower", "main" and "secondary" do not necessarily identify an order, a priority relationship or a relative position, but can simply be used to distinguish more clearly the different components from each other.

With reference to the Figures, the purging device according to the invention is indicated as a whole by the numeral **1.**

It is slaved to the fuel cells **2.** The fuel cell 2 is usually arranged in a plurality of stacked units. The stacked units are usually called fuel cell stacks or fuel stacks. In the present text, for the sake of simplicity, the fuel cell stack will simply be called fuel cell, also because the fuel cell 2 could be a single one.

The fuel cell 2 is adapted for reacting hydrogen (H₂) and oxygen (O₂) molecules, to produce water and electricity according to the phenomenon that takes place in a manner known per se in fuel cells.

In particular, the reaction involves oxidation at the anode:

H₂ → 2H⁺ + 2e⁻

reduction at the cathode:

2H⁺ + (1/2)O₂ + 2e⁻ → H₂O

The electricity obtained is then immediately usable for normal use.

At least one purging device 1, or even two, one at the anode side and one at the cathode side, the fuel cell 2 and the remaining portions of the system, per se known, accomplish a system for generating electricity **50.**

The purging device 1 comprises a series of ducts for conveying fluids, in particular gases, in reciprocal fluidic through connection, hereinafter simply referred to as connection.

The gases being transported are, in particular, the reaction gases, i.e. mainly hydrogen (H₂) or oxygen (O₂) too, and may also be inert gases or fluids accidentally present, such as nitrogen, water and the like.

In particular, the purging device 1 comprises a supply duct **3** for supplying a reaction gas to the fuel cell 2, in particular at the anode side, or at the cathode side. This supply duct 3 is preferably connected to a pressurised container **11** of the reaction gas, in particular of hydrogen (H₂) or oxygen (O₂). The supply duct 3 also runs through the entire stack of fuel cells 2.

The purging device 1 further comprises at least one purge duct **4** for purging the reaction gas sent to the fuel cell 2, and adapted to recycle the unreacted reaction gas back to the fuel cell 2. It is preferably connected to the supply duct 3. A first part of said connection preferably takes place by means of a first mixer **10,** consisting of a gas- or fluid-tight volume or chamber adapted to mutually connect a plurality of ducts, and in particular the two sides of the supply duct 3 and the output of the purge duct 4. The mixer 10 also divides the supply duct 3 into a first portion **3a,** from the container 11 to the first mixer 10, and a second portion **3b,** from the mixer 10 to the end of the fuel cell 2.

The purging device 1 further comprises a recirculation pump **6** adapted to circulate the reaction gas and preferably placed in the recirculation duct 4, and a purge valve 7 located upstream of the purge duct 4 and of the purge pump 6 and downstream of the fuel cell 2, preferably immediately after the output of the fuel cell 2. This purge valve 7 is preferably a solenoid valve that can be activated on command.

The purging device 1 also comprises a shutdown duct **5** for shutting down the gas from the fuel cell 2, connected to the purge duct 4, and a shutdown valve **8** placed on the shutdown duct 5. The shutdown duct 5 preferably opens into the environment or into suitable containers.

The purging device 1 further comprises an intermediate chamber **9,** consisting of a closed, gas- or fluid-tight volume in fluidic through connection with the ducts as mentioned hereafter. It preferably has a volume of between 50 and 200% of the volume of the gas circuit to be purged.

The intermediate chamber 9 is connected to the purge duct 4, to the supply duct 3, preferably in the second portion 3b, and to the shutdown duct 5, and arranged downstream of the purge valve 7 and upstream of the purge pump 6 and of the shutdown valve 8.

The purge pump 6 is thus suitable to put the intermediate chamber 9 in depression, in particular when the purge valve 7 is closed.

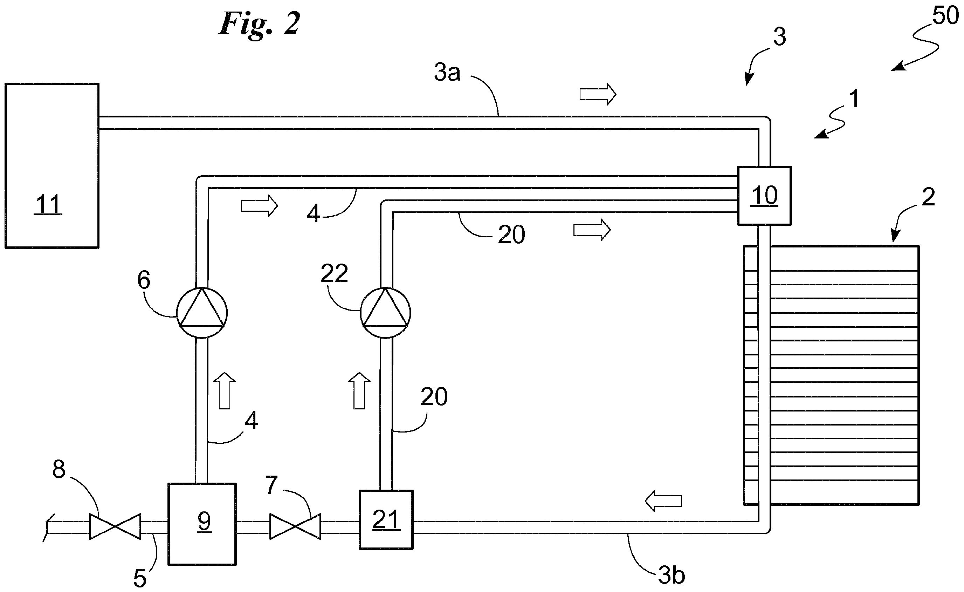

In a second variant (Fig. 2) the purging device 1 also comprises a recirculation duct **20,** running from a second mixer **21,** placed along the second portion 3b of the supply duct 3, up to the first mixer 10.

A recirculation pump **22** runs along the recirculation duct 20, which is adapted to operate the device in recirculating mode and to recirculate the excess reaction gases in the fuel cell 2.

The operation of the purging device 1 and of the electricity generation system 50, previously described in structural terms, is as follows.

It defines an innovative method of supplying and purging a fuel cell 2, or a stack of fuel cells 2, implemented by means of the said purging device 1 as described previously.

The supplying and purging method comprises a step of supplying the described reaction gases to the fuel cell 2, preferably through the pressurised container 11 of the reaction gas. The reaction gas then reaches the fuel cell 2 and reacts, at least in part, according to known mechanisms.

The supplying and purging method also comprises a purging step for purging, at least in part, the reaction gas sent to the fuel cell 2 through activation of the purge pump 6. In particular, the excess unreacted reaction gas is recirculated in the duct 4 and returned to the fuel cell 2. In the meantime, the same reaction gas fills the intermediate chamber 9.

Said method further comprises a depressurisation step for depressurising the intermediate chamber 9 by means of the purge pump 6 and by means of the closure of the purge valve 7.

The entire amount of the reaction gases present in the intermediate chamber 9 is then sent to the fuel cell 2, where it reacts, while the intermediate chamber 9 is in depression. In this step, the purge duct 4 is closed by the purge valve 7 and the reaction gases are sent to the fuel cell where they react.

Moreover, at predetermined time intervals, the purge valve 7 may be opened to increase the flow rate of the gas passing through the fuel cell 2. Otherwise, the purge valve 7 can remain closed and the system provides the amount of gas required by the electrochemical reactions in the fuel cell 2.

Alternatively, with a purging device 1 of the type shown in Fig. 2, the system can operate with the purge valve 7 closed, in recirculation mode.

Furthermore, when a purge is required, a second purging step is set up, wherein the purge valve 7 is open and the gases at least inside the fuel cell 2, and preferably also in the second part 3b of the supply duct 3, are expelled.

Purging is necessary, for example, in one of the following situations:
1. The voltage of a single cell belonging to the stack is below a minimum admissible value. For example 400 mV
2. The voltage varies with respect to the reference by an amount greater than a maximum allowable variation set equal to 10% of the value itself.
3. The standard deviation of the voltages of the cells that make up the stack exceeds a value greater than a determined admissible value.

This ejection occurs also and especially because of said depressurised intermediate chamber 9, which, as a direct result of the depressurisation, sucks gas from the fuel cells 2 and from the second part 3b of the supply duct 3.

The purging device 1 and the supplying and purging method according to the invention achieve major advantages.

In fact, the described process consumes substantially the entirety of the reaction gas sent to the fuel cell 2 and does not waste it during the purging step.

In addition, the suction carried out by the depressurised intermediate chamber 9 achieves a rapid and deep purge of the cell.

The invention is susceptible of variations falling within the scope of the inventive concept as defined by the claims.

In this context, all details are replaceable by equivalent elements and any type of materials, shapes and dimensions may be present.

## Claims

1. A method of supplying and purging a fuel cell (2), said method being implemented by means of a purging device (1) comprising:
- a supply duct (3) for supplying a reaction gas to said fuel cell (2),
- a purge duct (4) for purging said reaction gas sent to said fuel cell (2),
- a purge pump (6) suitable to make said reaction gas circulate in said purge duct (4),
- a shutdown duct (5) for shutting down the gas from said fuel cell (2), connected to said purge duct (4),
- a purge valve (7) placed upstream of said purge duct (4) and of said purge pump (6) and downstream of said fuel cell (2),
- an intermediate chamber (9) connected to said purge duct (4), to said supply duct (3) and to said shutdown duct (5) and positioned downstream of said purge valve (7),
- said purge pump (6) being suitable to put said intermediate chamber (9) in depression.
said method comprising:
- a supply step (3) for supplying a reaction gas to said fuel cell (2),
- a purging step (4) for purging, at least in part, said reaction gas sent to said fuel cell (2) through activation of said purge pump (6),
- a depressurisation step for depressurising said intermediate chamber (9) by means of said purge pump (6) and of said purge valve (7),
- a second purging step, in which said purge valve (7) is open and the gases at least inside said fuel cell (2) are expelled through said shutdown duct (5) also due to said intermediate depressurised chamber (9).

2. A supplying and purging method according to the preceding claim, wherein said intermediate chamber (9) is placed between said purge valve (7) and said purge pump (6).

3. A supplying and purging method according to at least one preceding claim, comprising a first mixer (10) connected to said supply duct (3) and said purge duct (4).

4. A supplying and purging method according to at least one preceding claim, wherein said supply duct (3) is connected to a pressurised container (11) of said reaction gas.

5. A supplying and purging method according to at least one preceding claim, wherein said reaction gas is hydrogen (H₂).

6. A supplying and purging method according to at least one preceding claim, wherein said reaction gas is oxygen (O₂).

7. A supplying and purging method according to at least one preceding claim, comprising a shutdown valve (8) placed on said shutdown duct (5).

8. A supplying and purging method according to at least one preceding claim, comprising a recirculation duct (20), running from a second mixer (21) to said first mixer (10), placed along said supply duct (3) downstream of said fuel cell (2), and a recirculation pump (22) placed along said recirculation duct (20), to operate the device in recirculating mode and to recirculate said excess reaction gases in said fuel cell (2).

## Patentansprüche

1. Verfahren zur Versorgung und Spülung einer Brennstoffzelle (2), wobei das genannte Verfahren über eine Spülvorrichtung (1) erfolgt, die Folgendes umfasst:
- eine Versorgungsleitung (3) des Reaktionsgases an die genannte Brennstoffzelle (2),
- eine Spülleitung (4) des genannten Reaktionsgases an die genannte Brennstoffzelle (2),
- eine Spülpumpe (6), die geeignet ist, das genannte Reaktionsgas in der genannten Spülleitung (4) umlaufen zu lassen,
- eine an die genannten Spülleitung (4) angeschlossene Shutdown-Leitung (5) des Gases von der genannten Brennstoffzelle (2),
- ein vor der genannten Spülleitung (4) und der genannten Spülpumpe (6) und nach der genannten Brennstoffzelle (2) angeordnetes Spülventil (7),
- eine an die genannten Spülleitung (4), an die genannte Versorgungsleitung (3) und an die genannte Shutdown-Leitung (5) angeschlossene und nach dem genannten Spülventil (7) angeordnete Zwischenkammer (9),
- wobei die genannte Spülpumpe (6) geeignet ist, in der genannten Zwischenkammer (9) einen Unterdruck zu erzeugen,
wobei das Verfahren Folgendes umfasst:
- einen Schritt der Versorgung (3) mit Reaktionsgas an die genannte Brennstoffzelle (2),
- einen Schritt des Spülens (4), zumindest partiell, des genannten an die genannte Brennstoffzelle (2) geleiteten Reaktionsgases durch Aktivierung der genannten Spülpumpe (6),
- einen Schritt der Erzeugung eines Unterdrucks in der genannten Zwischenkammer (9) über die genannte Spülpumpe (6) und das genannte Spülventil (7),
- einen zweiten Schritt des Spülens, bei dem das genannte Spülventil (7) geöffnet ist und zumindest die Gase im Inneren der genannten Brennstoffzelle (2) über die genannte Shutdown-Leitung (5) ausgestoßen werden, auch aufgrund der unter Unterdruck stehenden genannten Zwischenkammer (9).

2. Verfahren zur Versorgung und Spülung nach dem vorangegangenen Anspruch, bei dem die genannten Zwischenkammer (9) sich zwischen dem genannten Spülventil (7) und der genannten Spülpumpe (6) befindet.

3. Verfahren zur Versorgung und Spülung nach mindestens einem der vorangegangenen Ansprüche, das einen an die genannte Versorgungsleitung (3) und die genannte Spülleitung (4) angeschlossenen ersten Mixer (10) umfasst.

4. Verfahren zur Versorgung und Spülung nach mindestens einem der vorangegangenen Ansprüche, bei dem die genannte Versorgungsleitung (3) an einen unter Druck stehenden Behälter (11) des genannten Reaktionsgases angeschlossen ist.

5. Verfahren zur Versorgung und Spülung nach mindestens einem der vorangegangenen Ansprüche, bei dem das genannten Reaktionsgas Wasserstoff (H2) ist.

6. Verfahren zur Versorgung und Spülung nach mindestens einem der vorangegangenen Ansprüche, bei dem das genannten Reaktionsgas Sauerstoff (02) ist.

7. Verfahren zur Versorgung und Spülung nach mindestens einem der vorangegangenen Ansprüche, das ein auf der genannten Shutdown-Leitung (5) positioniertes Shutdown-Ventil (8) umfasst.

8. Verfahren zur Versorgung und Spülung nach mindestens einem der vorangegangenen Ansprüche, umfassend eine Rückleitung (20), die von einem zweiten Mixer (21) aus zu dem genannten ersten Mixer (10) entlang der Versorgungsleitung (3) nach der genannten Brennstoffzelle (2) führt, und eine Umlaufpumpe (22) entlang der genannten Rückleitung (20), um die Vorrichtung im Rückleitungsmodus in Betrieb zu nehmen und die genannten überschüssigen Reaktionsgase in die genannte Brennstoffzelle (2) zurückzuleiten.

## Revendications

1. Procédé d'alimentation et de purge d'une pile à combustible (2) ledit procédé étant mis en oeuvre par un dispositif de purge (1) comprenant :
- un conduit d'alimentation (3) de gaz de réaction à ladite pile à combustible (2),
- un conduit de purge (4) dudit gaz de réaction envoyé à ladite pile à combustible (2),
- une pompe de purge (6) destinée à faire circuler ledit gaz de réaction dans ledit conduit de purge (4),
- un conduit de fermeture (5) de gaz depuis ladite pile à combustible (2), raccordé audit conduit de purge (4),
- une valve de purge (7) disposée en amont dudit conduit de purge (4) et de ladite pompe de purge (6) et en aval de ladite pile à combustible (2),
- une chambre intermédiaire (9) raccordée audit conduit de purge (4), audit conduit d'alimentation (3) et audit conduit de fermeture (5) et disposée en aval de ladite valve de purge (7),
- ladite pompe de purge (6) étant destinée à mettre en dépression ladite chambre intermédiaire (9),
ledit procédé comprenant :
- une phase d'alimentation (3) de gaz de réaction à ladite pile à combustible (2),
- une phase de purge (4), au moins partielle, dudit gaz de réaction envoyé à ladite pile à combustible (2) à travers l'activation de ladite pompe de purge (6),
- une phase de dépressurisation de ladite chambre intermédiaire (9) à travers ladite pompe de purge (6) et ladite valve de purge (7),
- une seconde phase de purge, où ladite valve de purge (7) est ouverte et où les gaz au moins à l'intérieur de ladite pile à combustible (2) sont évacués à travers ledit conduit de fermeture (5) également du fait que ladite chambre intermédiaire (9) est dépressurisée.

2. Procédé d'alimentation et de purge selon la revendication précédente, où ladite chambre intermédiaire (9) est interposée entre ladite valve de purge (7) et ladite pompe de purge (6).

3. Procédé d'alimentation et de purge selon au moins une revendication précédente, comprenant un premier mélangeur (10) raccordé audit conduit d'alimentation (3) et audit conduit de purge (4).

4. Procédé d'alimentation et de purge selon au moins une revendication précédente, où ledit conduit d'alimentation (3) est raccordé à un récipient sous pression (11) dudit gaz de réaction.

5. Procédé d'alimentation et de purge selon au moins une revendication précédente, où ledit gaz de réaction est de l'Hydrogène (H₂).

6. Procédé d'alimentation et de purge selon au moins une revendication précédente, où ledit gaz de réaction est de l'Oxygène (O₂).

7. Procédé d'alimentation et de purge selon au moins une revendication précédente, comprenant une valve de fermeture (8) située sur ledit conduit de fermeture (5).

8. Procédé d'alimentation et de purge selon au moins une revendication précédente, comprenant un conduit de recirculation (20), qui part d'un second mélangeur (21) jusqu'audit premier mélangeur (10), situé le long dudit conduit d'alimentation (3) en aval de ladite pile à combustible (2), et une pompe de recirculation (22) située le long dudit conduit de recirculation (20), afin de faire fonctionner le dispositif en mode de recirculation et de faire recirculer dans ladite pile à combustible (2) lesdits gaz de réaction en excès.
